# DEMANDE DE BREVET EUROPEEN

(11) **EP 0 624 759 A1**
(43) Date de publication de la demande: **17.11.1994**
(21) Numéro de dépôt: 94401039.6
(22) Date de dépôt: 10.05.1994
(51) Int. Cl.: F24C 15/00, F24C 15/20, A47J 27/04

(54) **Four de cuisson vapeur à dispositif d'évacuation de la vapeur**

(30) Priorité: 11.05.1993 FR 9305638
(71) Demandeur: COMPAGNIE EUROPEENNE POUR L'EQUIPEMENT MENAGER "CEPEM", F-45140 St Jean-de-la-Ruelle (FR)
(72) Inventeur: Chevrier, Jean-Paul, THOMSON-CSF SCPI, F-92402 Courbevoie Cédex (FR); Baratin, Nicole, THOMSON-CSF SCPI, F-92402 Courbevoie Cédex (FR)
(74) Mandataire: Benoit, Monique

(57) **Abrégé**

La présente invention concerne un four de cuisson vapeur comportant un dispositif d'évacuation de la vapeur déclenché automatiquement et/ou manuellement par des moyens de commande avant que la cuisson ne soit terminée.

Le dispositif d'évacuation de la vapeur selon l'invention est essentiellement constitué d'une ouverture (7) pratiquée sur l'une des parois (30) de la cavité (3), et d'un clapet (8) relié mécaniquement à la cavité par des moyens de maintien (11, 12, 13). Les moyens de commande contrôlent le dispositif de manière à ce que le clapet (8) vienne obturer l'ouverture (7) lorsque le dispositif d'évacuation est au repos, et s'éloigne de cette ouverture lorsque le dispositif d'évacuation est déclenché, permettant à la vapeur confinée dans la cavité (3) de s'échapper progressivement à l'extérieur de la cavité.

## Description

La présente invention a pour objet un four de cuisson vapeur équipé d'un dispositif d'évacuation de la vapeur.

Les fours de cuisson vapeur disponibles sur le marché à l'heure actuelle ne possèdent pas de dispositif de traitement de la vapeur en fin de cuisson. Il en résulte qu'à l'ouverture de la porte, une importante quantité de vapeur sort brutalement de la cavité du four et se libère dans la pièce, entraînant de ce fait des désagréments pour l'utilisateur, et d'éventuelles dégradations aux alentours (meuble porteur du four, plafond...).

La présente invention a pour objectif de pallier l'inconvénient précédent en proposant un four de cuisson vapeur comportant un dispositif d'évacuation de la vapeur.

Plus précisément, l'invention a pour objet un four de cuisson vapeur, caractérisé en ce qu'il comporte un dispositif d'évacuation progressive de la vapeur produite à l'intérieur de la cavité du four lorsque ce dernier est en fonctionnement, ledit dispositif d'évacuation étant déclenché par l'intermédiaire de moyens de commande avant la fin de la cuisson.

L'invention sera mieux comprise au vu de la description suivante, faite en référence aux figures annexées :
- Les figures 1A et 1B représentent un premier mode de réalisation possible d'un four de cuisson vapeur selon l'invention, dans les cas où le dispositif d'évacuation de la vapeur est respectivement au repos et en fonctionnement ;
- Les figures 2A et 2B illustrent un second mode de réalisation possible d'un four de cuisson selon l'invention, le dispositif d'évacuation de la vapeur étant respectivement au repos et en fonctionnement ;
- La figure 3 schématise une vue de dessus de la cavité du four munie du dispositif d'évacuation déclenché (c'est-à-dire en fonctionnement) de la figure 2B.

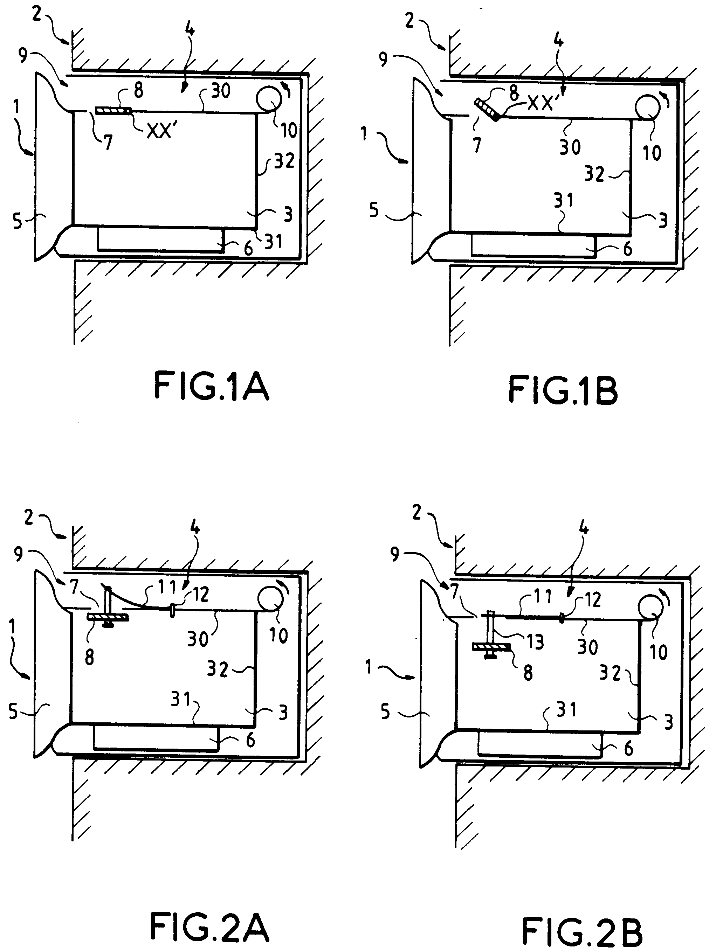

Les figures 1A à 2B représentent une vue en coupe latérale d'un four de cuisson vapeur 1, le four étant par exemple encastré dans un meuble 2. Le four de cuisson vapeur 1 est classiquement constitué d'une cavité 3 de forme sensiblement parallélépipédique comportant une paroi supérieure 30, une paroi inférieure 31, et trois parois latérales 32, d'un capot de protection 4 ou carrosserie de dimensions plus grandes que celles de la cavité de manière à contenir la cavité 3, d'une porte 5 venant fermer de manière étanche l'ouverture de la cavité 3, et d'un dispositif 6 générant la vapeur pour la cuisson des aliments, placé par exemple sous la cavité 3. Le dispositif 6 ne faisant pas partie de l'invention, il ne sera pas décrit ici.

Conformément aux deux exemples de réalisation représentés sur les figures, le dispositif d'évacuation de la vapeur selon l'invention est essentiellement constitué d'une ouverture 7 pratiquée sur l'une des parois de la cavité 3, et d'un clapet 8 relié mécaniquement à la cavité 3 par des moyens de maintien et venant obturer l'ouverture 7 lorsque le dispositif d'évacuation est au repos, et s'éloignant de cette ouverture lorsque le dispositif d'évacuation est déclenché. Le four objet de l'invention comporte en outre des moyens commandant le déclenchement du dispositif, comme nous le décrirons par la suite.

Le fonctionnement du four de cuisson vapeur muni de son dispositif d'évacuation de la vapeur est le suivant :

Pendant la majeure partie du temps de cuisson, le clapet 8 est positionné au niveau de l'ouverture 7 de manière à l'obturer. La vapeur produite par le dispositif 6 emplit la cavité 3, et le dispositif d'évacuation est en position dite de repos. Quelques minutes avant la fin de la cuisson, la génération de la vapeur est arrêtée, et les moyens de commande déclenchent le dispositif de manière à ce que le clapet 8 s'éloigne de l'ouverture 7. La vapeur contenue dans la cavité 3 peut alors s'échapper progressivement par l'ouverture 7.

Dans les deux exemples non limitatifs de fours encastrables des figures 1A à 2B, l'ouverture 7 est pratiquée dans la paroi supérieure 30 de la cavité 3, de sorte que la vapeur s'échappe naturellement vers le haut dans l'espace ou guide d'air qui existe entre cette paroi supérieure 30 et le capot de protection 4, puis à l'extérieur du four par une seconde ouverture 9 pratiquée au niveau supérieur de la façade du four. La vitesse de sortie de la vapeur peut être accélérée par une turbine de ventilation 10, fixée par exemple à l'arrière de la cavité 3 de manière à projeter la vapeur vers l'avant du four, à l'extérieur de ce dernier. L'utilisation de la turbine permet en outre de diffuser la vapeur, évitant de ce fait tout échauffement local. De plus, la vapeur diffuse sortant à l'avant du four est peu visible.

Il est également possible de donner à la cavité une configuration telle que la vapeur sorte naturellement par une ouverture pratiquée sur une autre paroi de la cavité.

Dans le premier exemple de réalisation conforme à l'invention représenté sur les figures 1A et 1B, le clapet 8 est maintenu par une tige axiale XX' s'étendant longitudinalement sur l'un des bords du clapet et fixée sur l'un des bords de l'ouverture, et autour de laquelle le clapet 8 peut se mouvoir en rotation. Lorsque le dispositif d'évacuation est au repos (figure 1A), le clapet est dans le prolongement de la paroi 30, parallèlement à celle-ci, et obture l'ouverture 7. L'obturation est préférentiellement partielle de manière à ce qu'il n'y ait pas de surpression à l'intérieur de la cavité 3 lorsque le four 1 fonctionne. Avant le terme de la cuisson, le dispositif 6 générateur de vapeur est de préférence arrêté, et le dispositif d'évacuation est déclenché par des moyens de commande non représentés, de telle sorte que le clapet soit animé d'une rotation autour de la tige axiale XX', et s'éloigne ainsi de l'ouverture 7, par exemple vers le haut. Entre deux cuissons, le dispositif est laissé préférentiellement en position déclenchée pour éviter toute moisissure à l'intérieur du four.

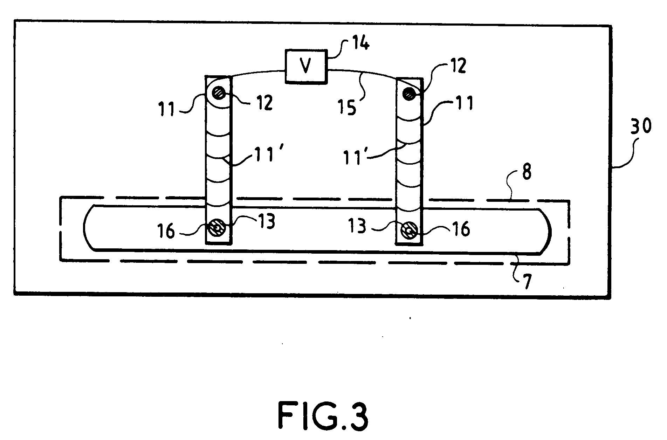

Dans la variante de réalisation du four objet de l'invention, représenté aux figures 2A, 2B et 3, les moyens de maintien du clapet 8 sont constitués de deux lames 11 dont une première extrémité est fixée sur le dessus de la paroi supérieure 30 et sensiblement parallèlement à celle-ci, par exemple au moyen de vis 12, et dont la deuxième extrémité supporte une extrémité d'une tige axiale 13 traversant l'ouverture 7 quasiment perpendiculairement, l'autre extrémité de cette tige axiale étant fixée au clapet 8. Dans cette variante, le clapet 8 reste donc toujours sensiblement parallèle à l'ouverture 7, et est placé à l'intérieur de la cavité lorsque le dispositif est déclenché. Les lames 11 sont en un matériau dont les propriétés sont telles qu'en chauffant ces lames, par exemple par l'intermédiaire de résistances électriques 11' alimentées en tension et entourant les lames, ces dernières se déforment et viennent plaquer le clapet 8 contre l'ouverture 7, comme le montre la figure 2A. Le matériau utilisé est par exemple un métal à mémoire de forme, de telle sorte que les lames puissent retrouver leur position initiale lorsqu'elles ne sont plus chauffées. Il est également possible d'utiliser des lames bimétal.

Avant le terme de la cuisson, l'alimentation en tension des lames 11 est coupée, les lames 11 reprennent leur forme normale, et le clapet 8 est ainsi éloigné de l'ouverture 7, comme représenté sur la figure 2B. Les moyens de commande du déclenchement du dispositif d'évacuation de la vapeur comprennent donc un dispositif 14 d'alimentation en tension et des fils électriques 15 reliant chaque lame à ce dispositif, comme schématisés sur la figure 3.

Le dispositif d'alimentation 14 peut par exemple être relié au réseau d'alimentation générale permettant le fonctionnement du four. Un intérêt supplémentaire procuré par cette variante réside dans le fait que, lorsque le four ne fonctionne pas, il n'y a pas d'alimentation en tension des résistances chauffantes sur les lames 11 de sorte que le clapet 8 reste éloigné de l'ouverture 7, cette ouverture 7 évitant ainsi tout risque de moisissure à l'intérieur du four.

Pour éviter tout risque de surpression à l'intérieur de la cavité 3 lorsque le four 1 fonctionne, les tiges axiales 13 présentent préférentiellement un trou axial 16 qui permet à la cavité 3 d'être toujours à la pression atmosphérique, même quand le clapet 8 est fermé.

Bien entendu, le principe de fonctionnement précédent est également applicable avec une seule lame 11 au lieu de deux, cette lame soutenant préférentiellement le clapet en son milieu pour assurer un bon guidage du clapet. Une amélioration possible de ce guidage peut être obtenu en plaçant un conduit de guidage fixé à la paroi supérieure et entourant les tiges axiales 13.

Le dispositif d'évacuation de la vapeur équipant le four 1 selon l'invention peut être déclenché automatiquement et/ou manuellement. Dans le premier cas, les moyens de commande sont par exemple reliés à la minuterie du four et déclenchent le dispositif au bout d'un temps prédéterminé, qui dépend de la durée totale de la cuisson. Dans le deuxième cas, on peut envisager que les moyens de commande comportent en outre un bouton de contrôle extérieur que l'utilisateur peut actionner à tout moment durant la cuisson.

## Revendications

1. Four de cuisson vapeur, caractérisé en ce qu'il comporte un dispositif d'évacuation progressive de la vapeur produite à l'intérieur de la cavité (3) du four lorsque ce dernier est en fonctionnement, ledit dispositif d'évacuation étant déclenché par l'intermédiaire de moyens de commande avant la fin de la cuisson.

2. Four de cuisson vapeur selon la revendication 1, caractérisé en ce que le dispositif d'évacuation de la vapeur est constitué d'une ouverture (7) pratiquée dans une paroi de la cavité (3), d'un clapet (8) et de moyens de maintien (XX'; 11, 11', 12, 13) reliant mécaniquement le clapet (8) à la cavité (3), et en ce que les moyens de commande contrôlent le dispositif d'évacuation de la vapeur de manière à ce que le clapet (8) obture l'ouverture (7) lorsque ledit dispositif est au repos, et s'éloigne de cette ouverture (7) lorsque ledit dispositif est déclenché.

3. Four de cuisson vapeur selon l'une quelconque des revendications précédentes, caractérisé en ce que ladite paroi est la paroi supérieure (30) de la cavité.

4. Four de cuisson vapeur selon l'une quelconque des revendications précédentes, caractérisé en ce qu'il comporte en outre une turbine de ventilation (10) placée à l'intérieur de la cavité et projetant la vapeur à l'extérieur du four.

5. Four de cuisson vapeur selon l'une quelconque des revendications précédentes, caractérisé en ce que les moyens de maintien sont constitués d'une tige axiale (XX') s'étendant longitudinalement sur l'un des bords du clapet (8) et fixée sur l'un des bords de l'ouverture (7), le clapet pouvant effectuer un mouvement de rotation autour de cette tige axiale.

6. Four de cuisson vapeur selon la revendication 5, caractérisé en ce que le clapet (8) est de dimension inférieure à l'ouverture (7) de manière à obturer partiellement l'ouverture lorsque le dispositif d'évacuation de la vapeur est au repos.

7. Four de cuisson vapeur selon l'une quelconque des revendications 1 à 4, caractérisé en ce que les moyens de maintien du clapet (8) sont constitués d'au moins une lame métallique (11) dont une première extrémité est fixée sur ladite paroi à l'extérieur de la cavité (3), d'une tige axiale (13) supportée par la deuxième extrémité de la lame (11) et traversant l'ouverture (7), le clapet (8) étant fixé à ladite tige à l'intérieur de la cavité (3), et en ce que les moyens de commande comprennent un dispositif (14) d'alimentation en tension relié électriquement à une résistance électrique (11') entourant la lame (11), une tension étant délivrée lorsque le dispositif d'évacuation de la vapeur est au repos, déformant la lame (11) de telle manière que le clapet (8) obture l'ouverture (7).

8. Four de cuisson vapeur selon la revendication 7, caractérisé en ce que la tige axiale (13) possède un trou axial (14).

9. Four de cuisson vapeur selon la revendication 7, caractérisé en ce que le clapet (8) est de dimension inférieure à l'ouverture (7) de manière à obturer partiellement l'ouverture lorsque le dispositif d'évacuation de la vapeur est au repos.

10. Four de cuisson vapeur selon l'une quelconque des revendications précédentes, caractérisé en ce que les moyens de commande déclenchent automatiquement le dispositif d'évacuation de la vapeur au bout d'un temps prédéterminé.

11. Four de cuisson vapeur selon l'une quelconque des revendications précédentes, caractérisé en ce que les moyens de commande comportent un bouton de contrôle extérieur dont l'actionnement provoque le déclenchement du dispositif d'évacuation.

12. Four de cuisson vapeur selon l'une quelconque des revendications précédentes, caractérisé en ce que, entre deux cuissons, le dispositif d'évacuation de la vapeur est laissé en position déclenchée.
